(19) Europäisches Patentamt
European Patent Office
Office européen des brevets

(11) Publication number: **0 315 224**
**A1**

(12) # EUROPEAN PATENT APPLICATION

(21) Application number: 88201629.8

(22) Date of filing: 28.07.88

(51) Int. Cl.4: C08K 5/34 , C08K 5/35 , C08K 5/47 , D06P 5/00 , D06P 1/00 , D06P 3/00 , D06P 3/79 , D06P 1/90 , A63H 33/22 , //C09B19/00

(30) Priority: 05.11.87 IT 2252987

(43) Date of publication of application: 10.05.89 Bulletin 89/19

(84) Designated Contracting States: AT BE CH DE FR GB GR IT LI LU NL SE

(71) Applicant: ENICHEM SYNTHESIS S.p.A.
Via Ruggero Settimo 55
I-90139 Palermo(IT)

(72) Inventor: Traverso, Enrico
Via MonteBianco 22
I-20052 Monza Milan(IT)
Inventor: Crisci, Luciana
Via Madre Cabrini 167
I-20079 Sant'Angelo Lodigiano Milan(IT)
Inventor: Casilli, Nicola
Via Bagioli 16
I-48100 Ravenna(IT)

(74) Representative: Roggero, Sergio et al
Ing. Barzanò & Zanardo Milano S.p.A. Via Borgonuovo 10
I-20121 Milano(IT)

(54) **Doll or other children's toy with photochromatic characteristics and the method for its preparation.**

(57) A doll or other children's toy with photochromatic characteristics are formed from an opaque organic polymer material containing on its surface or incorporated within its material at least one photochromatic organic compound chosen from the classes of spirooxazines and spiropiranes.

The methods for preparing said photochromatic objets are described.

EP 0 315 224 A1

## DOLL OR OTHER CHILDREN'S TOY WITH PHOTOCHROMATIC CHARACTERISTICS, AND THE METHOD FOR ITS PREPARATION

This invention relates to a doll or other children's toy with photochromatic characteristics, and the method for its preparation.

It is known in the art to use inorganic photochromatic compounds as additives for polymer compositions used for producing dolls or the like. In this manner it is possible to produce objects which manifest blushing or suntanned phenomena or other local colour variations when exposed to sunlight or to artificial light sources having UV component of suitable wavelength.

For example, British patent application No. 2,144,433 describes the use of additives based on silver halides supported on silica, and U.S. patent 4,134,853 describes the use of additives based on titanium, iron and lead oxides.

These are not completely satisfactory for the following reasons. A relatively high quantity (up to 50% of the polymer) of these additives is required to obtain the desired photochromatic effect, resulting in alteration of the polymer mechanical and optical characteristics. In addition the colour tonality range of the activated forms is limited, and generally lies within the yellow-orange-brown regions. Finally, a considerable time is required for activation and deactivation of the additives. A further known photochromatic additive is mercury dithizonate as described in U.S. patent 2,921, 407. This additive has however the following drawbacks: the initial coloration in the inactivated form is rather fierce with a yellow-orange tonality; its life is rather limited as the additive is subject to rapid degradation; there are toxicity problems deriving from the presence of mercury which, under European regulations (NF S 51 204 of July 1984), cannot be present in a quantity exceeding 100 mg/kg in children's toys.

It has now been found that the aforesaid drawbacks can be obviated by using spiro oxazine or spiropirane compounds for giving photochromatic characteristics to dolls or other children's toys of opaque organic polymer construction.

In particular, it has been found that said photochromatic organic compounds are able to give photochromatic characteristics to objects made from organic polymer material opaque by itself or rendered opaque by incorporation of inorganic and/or organic fillers and pigments when applied in very small quantities to the surface of the objects or incorporated into the object material. In either case, their activation time is very short and their resistance to fatigue and ageing is sufficiently high.

Particularly on activation with sunlight they manifest aesthetically pleasing colour tonalities which are not obtainable with photochromatic additives of the known art.

Thus according to one of its aspects, the present invention provides a doll or other children's toy of opaque organic polymer containing on its surface or incorporated within its material at least one photochromatic compound chosen from the class of spiro oxazines or spiropiranes.

Photochromatic organic compounds particularly preferred according to the present invention are the spiro-oxazines which can be defined by the general formula (I) :

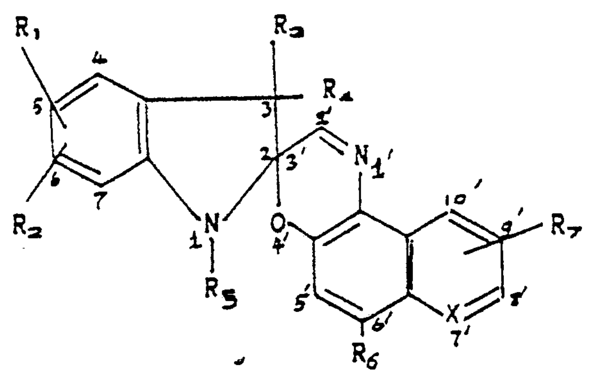

(I)

where:

**$R_1$ and $R_2$** independently represent a hydrogen or halogen (fluorine, chlorine or bromine) atom or a group chosen from $C_1$-$C_5$ linear or branched alkyl, $C_1$-$C_5$ perfluoro-alkyl, $C_1$-$C_5$ alkoxy, nitro or cyano;

**$R_3$ and $R_4$** independently represent $C_1$-$C_5$ linear or branched alkyl, phenyl or benzyl groups; or $R_3$ and $R_4$ when considered jointly with the carbon atom to which they are linked form a $C_5$-$C_8$ cycloalkyl group;

**$R_5$** represents a $C_1$-$C_5$ linear or branched alkyl, phenyl, benzyl or allyl group;

**$R_6$** represents a hydrogen atom or a $C_1$-$C_5$ linear or branched alkyl group or the group $-NR_8R_9$ where $R_8$ is a $C_1$-$C_5$ linear or branched alkyl, phenyl or benzyl group, $R_9$ is hydrogen or has the same meaning as $R_8$, or $R_8$ and $R_9$ when considered jointly with the nitrogen atom to which they are linked form a cyclic structure comprising 5-12 members and possibly containing a further heteroatom chosen from oxygen and nitrogen; and

**$R_7$** represents a hydrogen or halogen (fluorine, chlorine or bromine) atom or a group chosen from: $C_1$-$C_5$ linear or branched alkyl, $C_1$ - $C_5$ alkoxy, cyano, thio-ether and carboxylated ester with 1-3 carbon atoms in the ester portion, or represents an aromatic or heterocyclic condensed ring;

**X** represents CH or N-.

In particular, the groups $R_1$ and $R_2$, when not hydrogen, can be linked in any of positions 4, 5, 6 and 7 of the indoline part of the molecule. In addition the group $R_7$, if not representing hydrogen or an aromatic or heterocyclic condensed ring, can be present in any of the positions $7^1$, $8^1$, $9^1$ and $10^1$ of the naphthene part of the molecule.

In the preferred embodiment photochromatic compounds corresponding to general formula (I) are used in which:

**$R_1$ and $R_2$** independently represent a hydrogen atom or the methyl group;

**$R_3$ and $R_4$** each represent the methyl group or jointly represent the cyclohexyl group;

**$R_5$** represents the methyl group;

**$R_6$** represents a hydrogen atom or the - $NR_8R_9$ group where the groups $R_8$ and $R_9$ together with the nitrogen atom to which they are linked form a piperidyl, morpholyl, pyrrolidyl or hexamethyleneimino ring structure; and

**$R_7$** represents a hydrogen atom; and

**X** represents CH.

Examples of preferred photochromatic compound used according to the present invention are

1,3,3,4,5 or 1,3,3,5,6-pentamethyl spiro (indoline-2,3′-[3H]-naphtho-(2,1-b)-(1,4)-oxazine);

1,3,3-trimethyl spiro (indoline-2,3′-[3H]-naphtho-(2,1-b)-(1,4)-oxazine);

1,3,3-trimethyl spiro (indoline-6′-(1-piperidyl)-2,3′-[3H]-naphtho-(2,1-b)-(1,4)-oxazine);

1,3,3-trimethyl spiro (indoline-6′-(1-morpholyl)-2,3′-[3H]-naphtho-(2,1-b)-(1,4)-oxazine);

1,3,3,4,5- or 1,3,3,5,6-pentamethyl spiro (indoline-6′-(1-piperidyl)-2,3′-[3H]-naphtho-(2,1-b)-(1,4)-oxazine); and

1,3,3-trimethyl spiro (indoline-6′-(1-piperidyl)-9′-(methoxy)-2,3′-[3H]-naphtho-(2,1-b)-(1,4)-oxazine).

The spiropiranes, useful for the purposes of the present invention, are photochromatic organic compounds which can be defined by the following general formulae (II), (III), (IV) and (V)

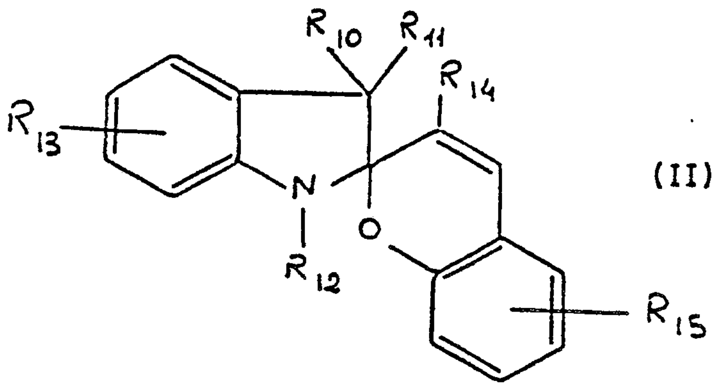

(II)

indoline naphtho piranes

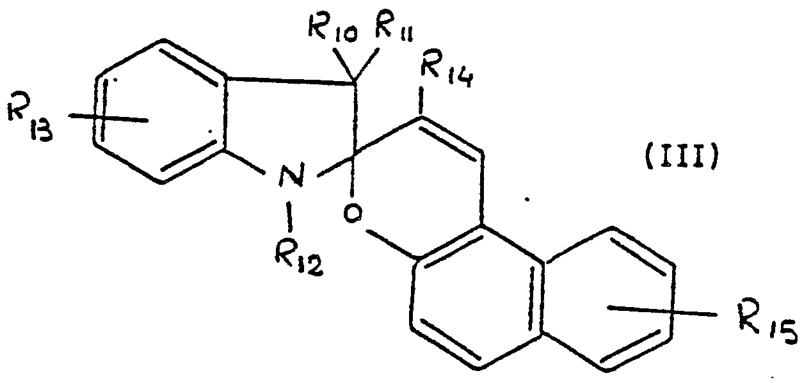

(III)

benzothiazoline spiro piranes

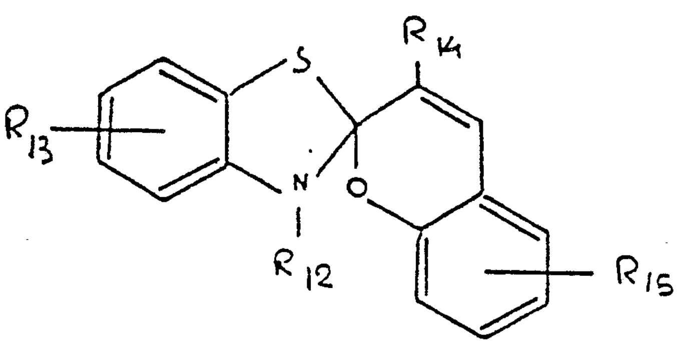

(IV)

benzoxazoline spiro piranes

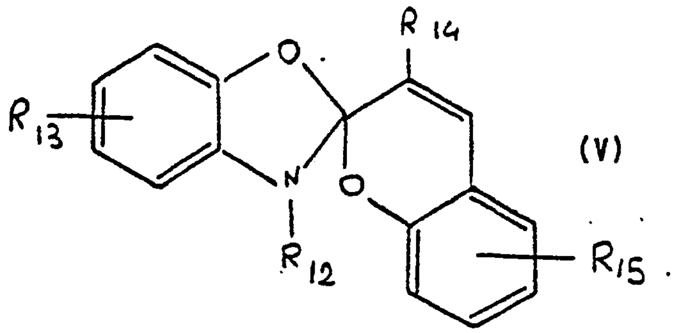

(V)

In the preceding general formulae:

**$R_{10}$ and $R_{11}$** represent alkyl or aryl groups;

**$R_{12}$** represents an alkyl, aryl group or alkyl substituted group (such as hydroxyalkyl, halogenalkyl, carbalcoxyalkyl, alkoxyalkyl and amminoalkyl);

**$R_{14}$** represents hydrogen or an alkyl, aryl or alkoxy

**$R_{13}$ and $R_{15}$** represent hydrogen or mono- or poly-substitution groups, chosen among alkyl and substituted alkyl groups, or halogen, nitro or alkoxy.

The aforesaid photochromatic compounds are used, according to the present invention, in the manufacture of dolls or various puppets, toy animals or other children's toys of organic polymer construction, said organic polymer material being opaque by itself or rendered opaque by the presence of coloured and/or white organic or inorganic pigments in the material, of opacizing inorganic fillers, of plasticizing or other materials.

The quantity of photochromatic compound incorporated into the object material, can vary from 0,01 to 1% by weight with respect to the polymer and preferably will be of the order of 0.02-0.4% by weight.

When the photochromatic compound is applied to the surface of the object, the surface area will contain the photochromatic compound in about the above mentioned ratios.

The organic polymer materials best suited to this purpose are rigid and plasticized polyvinylchloride, polyurethane, polyolefines, polystirene and elastomers (rubbers) of various type.

The photochromatic compound can be applied with various methods and the following ones constitute non limitative forms of embodiments:

- addition by incorporation in the material and in a quantity of 0.01 - 1% by weight and preferably 0.02 - 0.4% by weight either with the polymer or with the prepolymer taking care that the temperature during the subsequent transformation into the required object does not exceed 190 °C, this being the maximum limit of thermal stability of the photochromatic compounds used. This method is preferably used in the case of objects prepared from plasticised polyvinylchloride, also known as Plastisol; the addition by incorporation into the material is also useful in the case of olefine polymers;
- mixing a quantity of 0.01 - 1% by weight and preferably 0.02 -0.4% by weight with an organic paint product chosen from those normally used in the art (for example those based on polyvinylchloride, polyurethane, chlorinated rubber, alkyd resins, etc.) and spraying or brushing the mixture onto the surface of the formed object.

This method is particularly applicable in the case of objects preformed in plasticised polyvinylchloride;

- adsorption of the photochromatic compound onto the surface of the preformed object by immersing the object in an organic solution (for example in toluene) containing 0.01 - 5% by weight and preferably 0.05 - 3% by weight of the photochromatic compound, followed by drying the object.

This method can be applied to objects preformed in plasticised polyvinylchloride or in rubber;

- thermal transfer of the photochromatic compound to the surface of the preformed object.

In all cases, operating in the aforesaid manner, dolls or other children's toys are obtained which when exposed to sunlight or to UV radiation of suitable wavelength, reversibly assume a colour which depends on the photochromatic compound used, the nature of the type of organic polymer and the quantity of stable tonality dyes already contained in the polymer.

For example, when the photochromatic compound (photochromatic compound A) corresponding to general formula (I) in which $R_1 = R_2 = R_3 = R_4 = R_5 = CH_3$ ($R_1$ and $R_2$ being in positions 5 and 6 of the indolinic part of the molecule) and $R_6 = R_7 = H$ is exposed to UV radiation of wavelength $\lambda$ = 346 nm,

it is transformed into a reversible green-blue coloured form with an absorption maximum at 620 nm. In contrast, when the photochromatic compound (photochromatic compound B) corresponding to general formula (I) in which $R = R_2 = H$, $R_3 = R_4 = R_5 = CH_3$, $R_6 = $ =N-piperidyl and $R_7 = H$ is exposed to light of $\lambda = 364$ nm, it is transformed into a reversible blue-violet coloured form with an absorption maximum at 580 nm.

Particular colour effects can be obtained by using two or more different photochromatic compounds chosen from those of the preceding formulae. In addition further colour effects can be obtained by applying a photochromatic compound or a mixture of photochromatic compounds to objects to which stable inorganic and/or organic dyes have already been added.

For example in the case of plasticised polyvinylchloride to which the usual stabilisers and photochromatic compound A have been added, a blue-green coloration is obtained on exposure to sunlight. If such polyvinylchloride also contains stable dyes of red-orange tonality (normally used in the known art) in suitable quantity, a brown-violet coloration is obtained on exposure to sunlight.

On exposure to sunlight, the times required for activation from the colourless inactivated form to the coloured form of 50% and 90% of maximum intensity are of order of 10 seconds and 30 seconds respectively, and the time required for returning from the coloured form of 90% maximum intensity to the nearly colourless form is of the order of one minute.

It is remarkable that the photochromatic compounds have good stability under their conditions of use in the present invention. In particular, objects of polyvinylchloride painted with polyurethane varnish containing the photochromatic compound and prepared in accordance with Example 2 conserved more than 80% of their activity after 50 hours of accelerated ageing by exposure to a Xenon lamp (Weatherometer ATLAS CI 65).

In the following experimental examples given to illustrate the scope of the present invention but without representing a limitation thereon, the following photochromatic compounds are used:

<u>Photochromatic compound A</u>

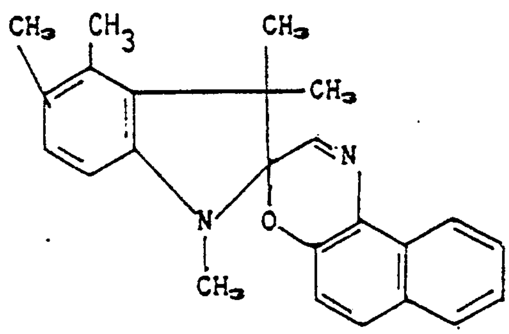

1,3,3,4,5-pentamethyl spiro (indoline-2, 3'-[3H]-naphtho-(2,1-b)-(1,4)-oxazine).

<u>Photochromatic compound B</u>

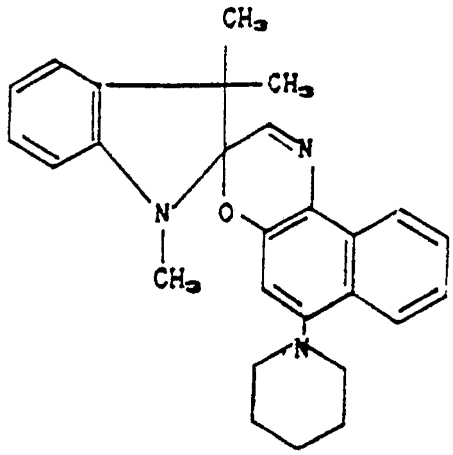

1,3,3-trimethyl spiro (indoline-6'-(1-piperidyl)-2,3'-[3H]-naphtho-(2,1-b)-(1,4)-oxazine).

**Photochromatic compound C**

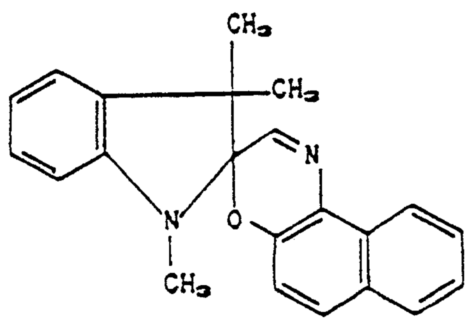

1,3,3-trimethyl spiro (indoline-2,3'-[3H]-naphtho-(2,1-b)-(1,4)-oxazine).

**EXAMPLE 1**

A liquid plastisol composition is used having the following composition in parts by weight:

| | |
|---|---|
| micronized polyvinylchloride | 100 |
| diisononylphthalate | 60 |
| white spirit | 10 |
| VINLUB[R] ( epoxidated soya oil) | 3 |
| IRGASTAB[R] CZ122 (Ca-Zn) | 2 |
| Pigmenting mixture | 0,3 |

N.B.:

- VINLUB and IRGASTAB are trademarks
- the pigmenting mixture is a titanium dioxide-based mixture and contains small quantities of orange pigments.

300g of this composition are fed into a closed mould in the shape of the body portion of a doll. The composition is solidified by gelling using the roto-moulding method, placing it on the mobile base of an oven heated to 200° C. The oven base is subjected for 6 minutes to rapid rotation and revolution movement. The mould is then cooled and the hollow body portion of a doll with pink colouring and soft elastic consistency is extracted.

**EXAMPLE 2**

0,08 g of the photochromatic compound A are dissolved in 100 g of the hydroxyl component (based on DESMOPHEN$^R$, a commercial product of the Bayer Company) of a colourless flexible urethane varnish.

This hydroxyl component also contains 200-300 ppm of a dialkyl-diacyloxy-stannane as catalyst.

25g of the isocyanate component (Desmodur$^R$ N, a commercial product of the Bayer Company) are added to this hydroxyl component.

The mixture obtained is diluted with acetic esters and is sprayed onto the doll's body prepared in Example 1. The varnish layer is then dried and polymerised operating at 20° C for 12 hours and at 70° C for the next 12 hours. The thickness of the varnish layer when dry is about 100 microns.

The doll preserves its initial pink colour when exposed in regions not illuminated by sunlight or in regions illuminated by normal artificial light. When the doll is exposed to sunlight it assumes a green-blue colour within a time of the order to 5-10 seconds and returns to its original colour in a time of about 1 minute when placed in a region not illuminated by sunlight.

**EXAMPLE 3**

The body of a doll prepared as described in Example 1 is immersed for 10 minutes in a 1% w/w solution of the photochromatic compound A in toluene operating at 25° C. The impregnated doll's body is then dried in an oven at 70° C for 3 hours.

When exposed firstly in a region not illuminated by sunlight and then in one illuminated by sunlight the doll's body undergoes a colour change similar to that of Example 2 with a rate of change similar to that of Example 2.

**EXAMPLE 4**

A small rubber toy in the shape of a dog of light grey-pink colour is immersed for 10 minutes in a 2% w/w solution of the photochromatic compound B in toluene kept at 40° C. The toy is then dried in an oven at 70° C for 3 hours. The original colour of the toy is inaltered.

When the toy is exposed to sunlight, it assumes a violet-bleu colour within a time of about 10 seconds, and when returned to a region not illuminated by sunlight it reassumes its original colour within a time of about 1 minute.

**EXAMPLE 5**

150mg of the photochromatic compound A are dissolved, over a period of 30 minutes by mechanical stirring, in 300 g of a liquid plastisol composition identical to that of Example 1.

100 g of the resultant composition are fed into a mould in the shape of a doll's head and are solidified by gelling using the roto-moulding method in the manner described in Example 1.

In this manner a hollow pink doll's head of soft elastic consistency is obtained.

When exposed to sunlight, this head assumes a green-blue colour within a time of 5-10 seconds and reassumes its original pink colour within a time of about 1 minute when returned to a region not illuminated by sunlight.

This colour change also occurs, with a similar tonality change and at a similar rate, when the doll's head is exposed to the light of a sun ray lamp of the type used for artificial suntanning and comprising in its spectrum a significant ultraviolet component (280-370 nm).

**EXAMPLE 6**

150 mg of the photochromatic compound B are dissolved, over a period of 30 minutes by mechanical stirring, in 300 g of a liquid plastisol composition identical to that of Example 1.

100 g of the resultant composition are fed into a mould in the shape of a doll's head and are solidified by gelling using the roto-moulding method in the manner described in Example 1.

In this manner a pink-coloured doll's head is obtained. When exposed to sunlight, it assumes a violet-blue colour within a time of 5-10 seconds and reassumes its original pink colour within a time of about 1 minute when returned to a region not illuminated by sunlight.

**EXAMPLE 7**

300 g of a plastisol composition are prepared, differing from that of Example 1 only in the composition of the pigmenting mixture, which is enriched in red and yellow components and contains 45% titanium dioxide, 16% chromophthal red, 7% chromophthal yellow and 31% diisononylphthalate by weight. This pigmenting mixture is used in the same weight quantity as in Example 1.

100 g of this composition are fed into a mould in the shape of a doll's head and are solidified by gelling using the roto-moulding method in the manner described in Example 1.

In this manner a doll's head of light red-orange colour is obtained. When exposed to sunlight, it assumes a brown-violet colour within a time of 5-10 seconds and reassumes its original colour within a time of about 1 minute when returned to a region not illuminated by sunlight.

**EXAMPLE 8**

500 mg of the photochromatic compound C are dissolved, over a period of 30 minutes by mechanical stirring, in 300 g of a liquid plastisol composition identical to that of Example 1. 100 g of the resultant composition are subjected to the procedure described in Example 5. When the resultant hollow doll's head is exposed to sunlight, it assumes a brown-violet colour within a time of 5-10 seconds and reassumes its original pink colour within a time of about 30 seconds when returned to a region not illuminated by sunlight.

**EXAMPLE 9**

In a dry blending mixer there are charged:

7 Kg. of grains of polyethylene LD-RIBLENE- CF-2200;

3 Kg. of grains of polyethylene HD ERACLENE ZB 5015;

100 g. of grains of pigmenting master titanium dioxide-based and of organge pigments bounded by low melting point (105° C) polyethylene wax;

30 g of vaseline oil;

25 g of photochromatic powder product C.

The components are mixed by stirring over 10 minutes.

The photochromatic compound is homogeneously dispersed and adheres to the surface of the grains wetted with vaseline oil.

The mixture is treated in a screw extruder at 140° C and thermally formed by the blow molding technique into a mould in the shape of a body portion of a doll.

The doll body portions thus obtained, of average rigid consistency, when exposed to sunlight assume a violet-blue colour within 5-10 seconds and riassume the initial pink colour within a time of about 30 seconds when returned to a region not illuminated by sunlight.

## Claims

**1.** A doll or other children's toy of opaque organic polymer material, containing on its surface or incorporated within its material at least one photochromatic compound chosen from the class of the spiro-oxazines of Formula (I) or from the class of the spiropiranes of Formula (II), (III), (IV) or (V).

**2.** A doll or other children's toy according to claim 1, characterized in that the photochromatic organic compound is chosen from the class of the spiro-oxazines (I).

**3.** A doll or other children's toy as claimed in claim 2, characterized in that said spiro-oxazines (I) are:
1,3,3,4,5 or 1,3,3,5,6-pentamethyl spiro (indoline-2,3′-[3H]-naphtho-(2,1-b)-(1,4)-oxazine);
1,3,3-trimethyl spiro (indoline-2,3′-[3H]-naphtho-(2,1-b)-(1,4)-oxazine);
1,3,3-trimethyl spiro (indoline-6′-(1-piperidyl)-2,3′-[3H]-naphtho-(2,1-b)-(1,4)-oxazine);
1,3,3-trimethyl spiro (indoline-6′-(1-morpholyl)-2,3′-[3H]-naphtho-(2,1-b)-(1,4)-oxazine);
1,3,3,4,5- or 1,3,3,5,6-pentamethyl spiro (indoline-6′-(1-piperidyl)-2,3′-[3H]-naphtho-(2,1-b)-(1,4)-oxazine); and
1,3,3-trimethyl spiro (indoline-6′-(1-piperidyl)-9′-(methoxy)-2,3′-[3H]-naphtho-(2,1-b)-(1,4)-oxazine).

**4.** A doll or other children's toy according to claim 1, characterized by containing said photochromatic compound incorporated in the material and in a quantity of from 0.01 to 1% by weight with respect of the polymer.

**5.** A doll or other children's toy according to claim 4, characterized in that the said photochromatic compound is present in a quantity of from 0.02 to 0.4% by weight with respect to the polymer.

**6.** A doll or other children's toy according to claim 1, characterized in that the polymer material is chosen from rigid polyvinylchloride, plasticized polyvinylchloride, polyurethane, polyolefines, polystirene and elastomers (rubbers).

**7.** A doll or other children's toy according to claim 6, characterized in that said polymer material is chosen from plasticized polyvinylchloride, polyethylene and elastomers (rubbers).

**8.** A doll or other children's toy according to claim 1, characterized in that it additionally contains one or more white or coloured inorganic pigments, white or coloured organic pigments and opacizing inorganic masses.

**9.** Process for the preparation of a doll or other children's toy according to claims 1 to 8, characterized in that at least one photochromatic organic compound with Formula from (I) to (V) is incorporated in an article of opaque polymer material, or is applied to the surface of the article itself.

**10.** Process according to claim 9, characterized in that at least one photochromatic compound with Formula from (I) to (V) is mixed with an opaque polymer material, or relative prepolymer, in a quantity of from 0.01 to 1% and preferably from 0.02 to 0.4% by weight with respect to the polymer or prepolymer and the mixture thus obtained is transformed into the finished object.

**11.** Process according to claim 9, characterized in that at least one photochromatic compound with Formula from (I) to (V) is applied to the surface of the object formed of opaque polymer material in the form of a varnish which contains said photochromatic compound in a quantity of from 0.01 to 1% and preferably from 0.02 to 0.4% by weight.

**12.** Process according to claim 9, characterized in that at least one organic photochromatic compound with Formula from (I) to (V) is applied to the surface of the object formed of opaque polymer material by impregnation of the object itself with a solution of the photochromatic compound in an organic solvent at a concentration of from 0.01 to 5% and preferably from 0.05 to 3% by weight.

**13.** Process according to claim 9, characterized in that at least a photochromatic compound with Formula from (I) to (V) is thermally transferred onto the surface of the object formed of opaque polymer material.

European Patent Office

# EUROPEAN SEARCH REPORT

Application Number

EP 88 20 1629

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 174 711 (PPG INDUSTRIES INC)<br>* Claims; page 2, lines 47-61; page 4, lines 36-43 *<br>--- | 1 | C 08 K 5/34<br>C 08 K 5/35<br>C 08 K 5/47<br>D 06 P 5/00<br>D 06 P 1/00<br>D 06 P 3/00<br>D 06 P 3/79<br>D 06 P 1/90<br>A 63 H 33/22 //<br>C 09 B 19/00 |
| X | AU-B-4 121 468 (AMERICAN CYANAMID CO.)<br>* Claims; page 7, lines 16-25; page 11, lines 5-14 *<br>--- | 1,2,4-6 | |
| X | US-H- 869 006 (G.C. NEWLAND)<br>* Abstract *<br>----- | 1,4-6 | |
| | | | TECHNICAL FIELDS SEARCHED (Int. Cl.4) |
| | | | C 08 K<br>C 08 L<br>D 06 P<br>A 63 H |

The present search report has been drawn up for all claims

| Place of search | Date of completion of the search | Examiner |
|---|---|---|
| THE HAGUE | 16-02-1989 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document